# EUROPEAN PATENT APPLICATION

(11) **EP 0 703 379 A1**
(43) Date of publication of application: **27.03.1996**
(21) Application number: 94830449.8
(22) Date of filing: 22.09.1994
(51) Int. Cl.: F16D 65/56

(54) **Adjuster mechanism for a disc brake**

(71) Applicant: ROCKWELL INTERNATIONAL CORPORATION, Pittsburg, Pennsylvania 15222-3123 (US)
(72) Inventor: Forni, Roberto, I-28062 Cameri, Novara (IT); Harrup, Clive, Bromham, Bedfordshire MK43 8JA (GB); Gaiotti, Roberto, I-10023 Chieri, Torino (IT)
(74) Representative: Leiser, Gottfried, Dipl.-Ing.

(57) **Abstract**

A caliper assembly for a disc brake having opposed friction pads (28) at least one of which may be axially displaced into engagement with a rotor (30) rotatably maintained about an axis and drivingly associated with a vehicle wheel. The caliper assembly includes an eccentric (15) which is bearingly carried in the caliper housing and rotatably engaged to a reciprocating element (20) to convert rotation of the eccentric (15) into a reciprocating motion. The eccentric is rotated by a lever (16) associated with an actuation means such as an air actuated cylinder. The reciprocating element (20) defines a first face and has first and second annularly displaced axially extending bores. Adjustable length sleeve assemblies (22,52) are located in the first and second bores with portions extending axially therefrom and connected to a load plate (24). The load plate defines an annularly extending axially displaced second face which may be axially positioned relative to the first face by adjustment of the sleeve assemblies (22,52). The sleeve assemblies each feature a first cylindrical member having a first end defining a head (60) and a second end having threads defined on the external surface thereof. A second cylindrical member having an opening defining a bore has threads defined on the internal surface thereof which cooperate with respective threads defined on the external surface of the first cylindrical member. The second cylindrical member includes a first end portion having an external surface which is rotatably received within one of the bores of the reciprocating element and a second opposing end defining a radially extending head located thereon defining a limit of axial displacement toward the first face of the load plate. The second cylindrical member is drivingly associated with an adjusting gear that may be used to define a coordinated relative rotary position between the first and second cylindrical members. Controlling the respective relative rotary position of the first and second cylinders is the technique by which the axially extending dimension of the adjustable length sleeve assemblies (22,52) is accomplished. The relative rotational position of the adjusting sleeve components establishes the dimensional relationship between the first face of the reciprocating element and the second face of the load plate (24) thereby accomplishing definition of the working clearance between the friction pad (28) and rotor (30). The relative rotational position may be achieved by harnessing excess angular displacement of the eccentric (15) which occurs when friction pad wear produces excess rotor to friction pad clearance and using this displacement to control the length of the sleeve assemblies (22,52). Such a mechanism utilizes a lever which is angularly displaced by movement of the eccentric. The lever engages a second lever which causes relative rotation between the cylindrical members of the sleeve assemblies. A torque limiting clutch is used to facilitate a torque override for de-adjust mode, and a one-way clutch assures maintenance of adjusted rotary positions.

## Description

### BACKGROUND OF THE INVENTION

### FIELD OF THE INVENTION

This invention relates to disc brake mechanisms and more specifically to mechanisms which provide for adjustment thereof to compensate for wear of the friction materials utilized therein.

### DESCRIPTION OF THE RELATED ART

Adjustment mechanisms for disc brake systems have been used previously. An example of such a mechanism is described in German patent application DE 41 31 630 A1 and DE 41 31 631 A1. The mechanism includes a disc brake caliper housing which defines a cavity containing a force application system which converts rotary motion into reciprocating motion by means of an eccentric causing reciprocation of a force application member. The system described therein teaches a pair of adjustable length pistons threadably engaging annularly displaced threaded bores of the force application member. The axially extending dimension between the force application member and the backing plate of the friction pad may be adjusted to compensate for wear in the friction pad by rotation of the threaded pistons. The pistons are rotated by engagement with a splined shaft which extends into a cooperating spline defined in a bore thereof. The adjustment mechanism which provides rotation of the splined shaft is carried on the caliper housing, necessitating a floating and telescoping relation between the spline defined in the internal bore of the pistons and the splined shaft. The adjustment mechanism as taught therein provides no de-adjust mode. Such is essential to remove worn friction pads for replacement. Therefore, there is a need for a disc brake system which permits de-adjusting procedure for removal and replacement of friction pads.

### SUMMARY OF THE PRESENT INVENTION

The present invention includes a caliper assembly for a disc brake having opposed friction pads at least one of which may be axially displaced into engagement with a rotor rotatably maintained about an axis and drivingly associated with a vehicle wheel. The caliper assembly includes a eccentric which is bearingly carried in the caliper housing and rotatably engaged to a reciprocating element to convert rotation of the eccentric into a reciprocating motion. The eccentric is rotated by a lever associated with an actuation means such as an air actuated cylinder. The reciprocating element defines a first face and has first and second annularly displaced axially extending bores. Adjustable length sleeve assemblies are located in the first and second bores with portions extending axially therefrom and connected to a load plate. The load plate defines an annularly extending axially displaced second face which may be axially positioned relative to the first face by adjustment of the sleeve assemblies. The sleeve assemblies each feature a first cylindrical member having a first end defining a head and a second end having threads defined on the external surface thereof. A second cylindrical member having an opening defining a bore has threads defined on the internal surface thereof which cooperate with respective threads defined on the external surface of the first cylindrical member. The second cylindrical member includes a first end portion having an external surface which is rotatably received within one of the bores of the reciprocating element ad a second opposing end defining a radially extending head located thereon defining a limit of axial displacement toward the first face of the load plate. The second cylindrical member is drivingly associated with an adjusting gear that may be used to define a coordinated relative rotary position between the first and second cylindrical members. Controlling the respective relative rotary position of the first ad second cylinders is the technique by which the axially extending dimension of the adjustable length sleeve assemblies is accomplished. The relative rotational position of the adjusting sleeve components establishes the dimensional relationship between the first face of the reciprocating element and the second face of the load plate thereby accomplishing definition of the working clearance between the friction pad and rotor. The relative rotational position may be achieved by harnessing excess angular displacement of the eccentric which occurs when friction pad wear produces excess rotor to friction pad clearance and using this displacement to control the length of the sleeve assemblies. Such a mechanism utilizes a lever which is angularly displaced by movement of the eccentric. The lever engages a second lever which causes relative rotation between the cylindrical members of the sleeve assemblies. A torque limiting clutch is used to facilitate a torque override for de-adjust mode, and a one-way clutch assures maintenance of adjusted rotary positions.

These and other aspects of the present invention will become more readily apparent by reference to the following detailed description of the embodiments as shown in the drawings.

### BRIEF DESCRIPTION OF THE DRAWINGS

Figure 1 is an exploded view of the components of the present invention;
Figure 2 is a side view of the eccentric assembly of the present invention;
Figure 3 is a plan view of the eccentric assembly of the present invention;
Figure 4 is a plan view of a cross section of the present invention;
Figure 5 is a perspective view of the load plate and piston interface;
Figure 6 is a fragmented view of the piston incorporated in the present invention;
Figure 7 is a perspective view of the clip used to secure the load plate to the piston;
Figure 8 is a plan view of the rigid lever of the present invention;
Figure 9 is a cross sectional view of the adjuster mechanism of the present invention;
Figure 10 is an exploded view of the adjuster mechanism of the present invention; and
Figures 11, 12 and 13 are sequential views of the interaction of the rigid level, the resilient lever and the reaction lever of the present invention in various stages of operation.

### DETAILED DESCRIPTION OF THE PREFERRED EMBODIMENT

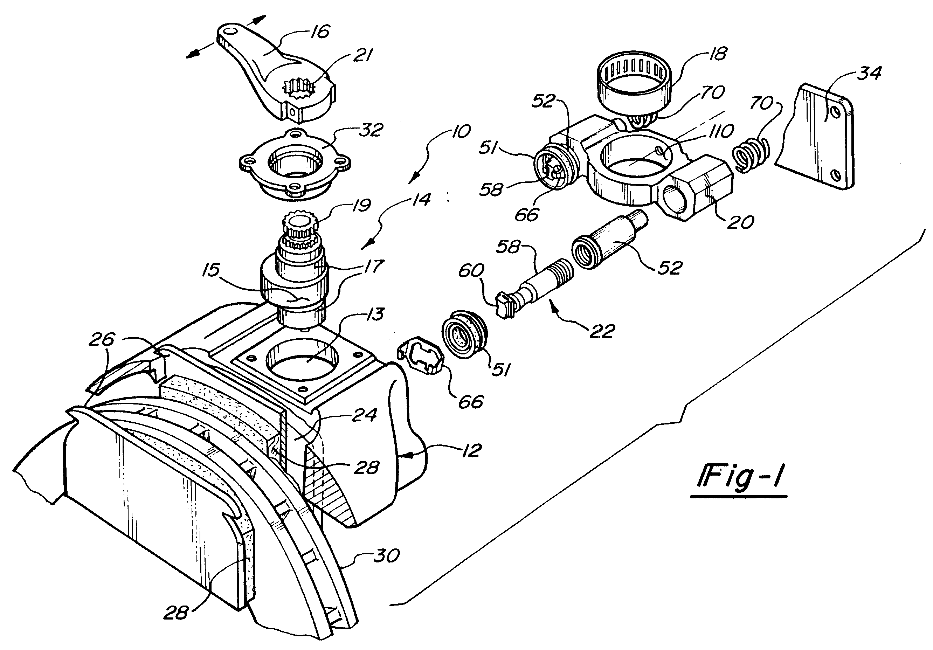

The preferred embodiment of the present invention as shown in Figure 1 includes a brake assembly 10 comprising caliper housing 12 defining a cavity 13. Eccentric assembly 14 includes eccentric 15 which is supported for rotation by sliding bearing journals 17,17. Eccentric assembly 14 further includes male spline 19 cooperating with female spline 21 formed on actuating lever 16. Motive force for actuation of the present invention is provided by a reciprocating actuator (not shown) applying a pivoting force to lever 16. Eccentric bearing retainer 32 defines and maintains the axis of rotation of eccentric assembly 14 within caliper housing 12. Eccentric bearing 18 is located within bore 110 formed in reciprocating element 20 to facilitate a low friction conversion of rotary motion of eccentric assembly 14 to reciprocating motion of reciprocating element 20. A pair of annularly displaced adjusting sleeve assemblies 22,22 are maintained within bores 38,38 defined in reciprocating element 20. Adjusting sleeve assemblies 22,22 are secured by clips 66,66 to load plate 24 which transmits force through backing plate 26 into friction material 28 upon application of force by reciprocating element 20. In such a manner, friction material 28 is displaced into engagement with rotor 30 to retard rotation of same. Cover plate 34 and reciprocating seals 51,51 define a closed structure sealing cavity 13 of caliper housing 12.

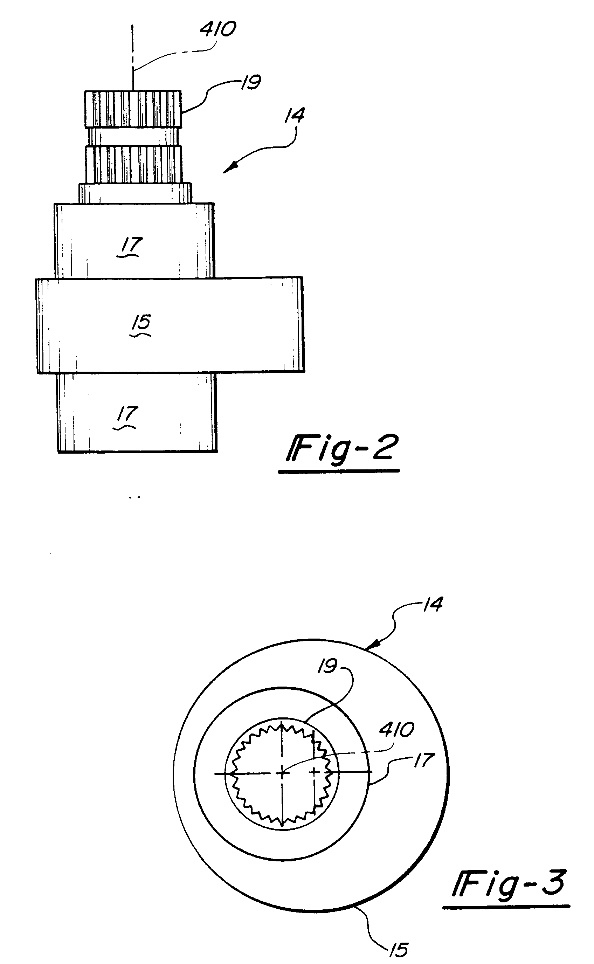

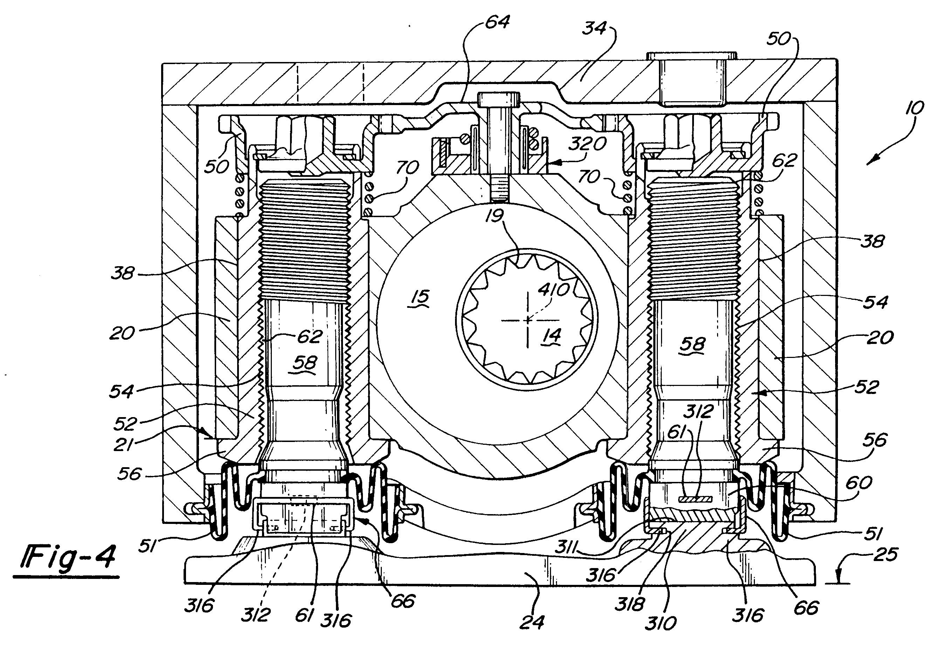

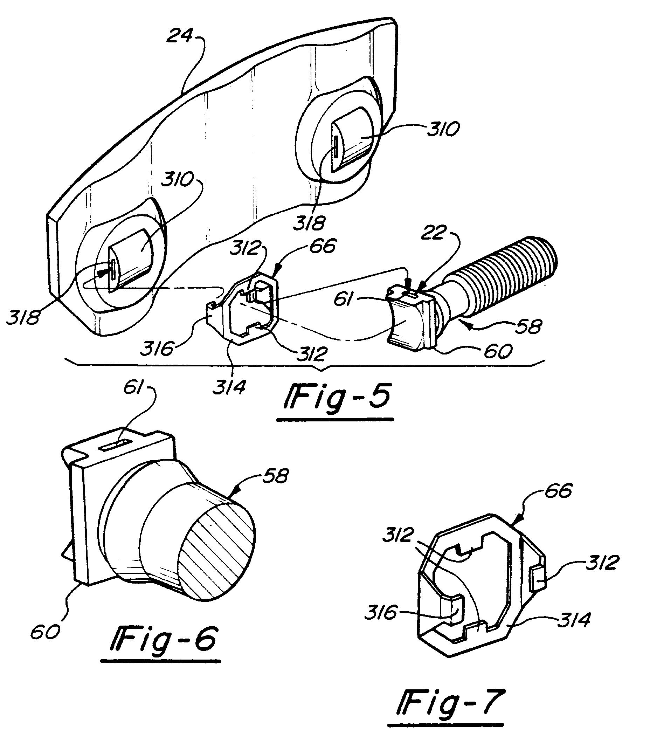

Figure 2 is a side view of eccentric assembly 14, whereas Figure 3 is a plan view thereof, demonstrating eccentric 15 with respect to axis 410 of eccentric assembly 14. Figure 4 is a plan view/cross-sectional view of reciprocating element 20 and adjustable sleeve assemblies 22,22. Reciprocating element 20 defines a reference face 21 from which the position of face 25 of load plate 24 is selectably adjusted. Such an adjustment is accomplished by controlling the dimension therebetween as a result of relative rotation of sleeve 52 with respect to piston 58. Sleeve 52 is maintained in low friction rotatable relation in bore 38 of reciprocating element 20. Annular head 56 is maintained in contact with face 21 by urging of spring 70. Gear 50 is drivingly connected to sleeve 52 by means of a press fit. Adjusting gear 64 is engageable with gear 50 to define a synchronized relative rotational position between piston 58 and sleeve 52 of each sleeve assembly 22,22. Piston 58 includes piston head 60 which may be secured to load plate 24 by clip 66. Load plate 24 includes annularly displaced semicylindrical projections 310 each defining a simple curved surface which cooperate with respective curved surfaces 311,311 defined on piston head 60 to establish a line-point of contact therebetween to transmit force to friction pad 28. (See Figure 5). Recesses 61,61 as shown in Figures 5 and 6 formed on opposite sides of piston head 60 receive inwardly directed tabs 312,312 of clip 66, as shown in Figure 7. Annular portion 314 of clip 66 surrounds piston head 60 and semicylindrical projections 310 and further includes axially displaced inwardly directed tabs 316 which engage recesses 318, 318. Recesses 61 and 318 provide a dimensionally greater depth than required by tabs 312 and 316 thereby permitting a degree of horizontal ad vertical movement. All other dimensional relations between recesses 61 and 318 and tabs 312 ad 316 conform closely to provide a anti-rotation effect. Clip 66,66 thereby establish an antirotational effect while permitting a range of relative displacement which additionally provides a self aligning relation of piston.

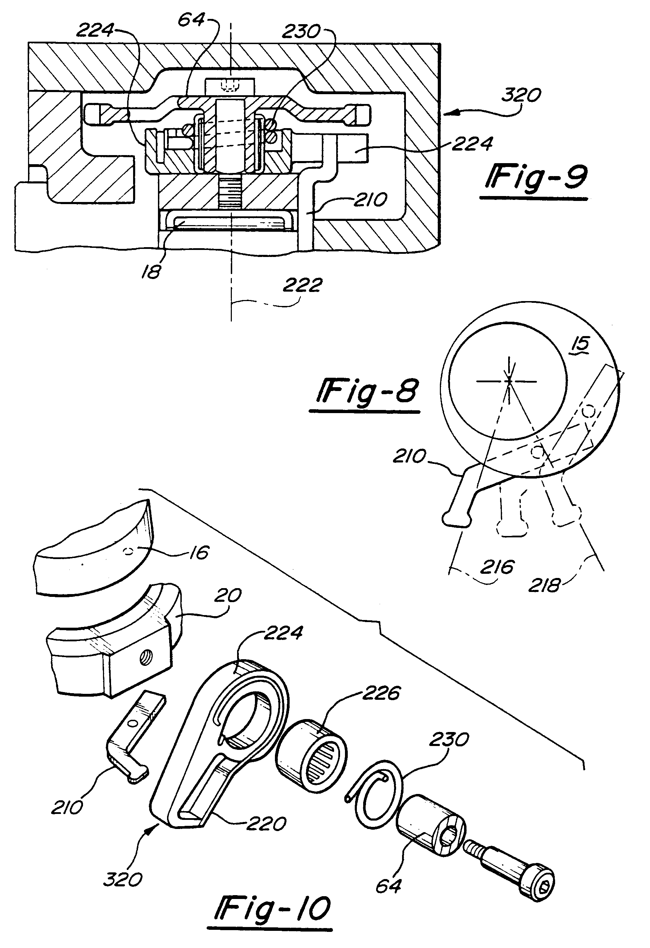

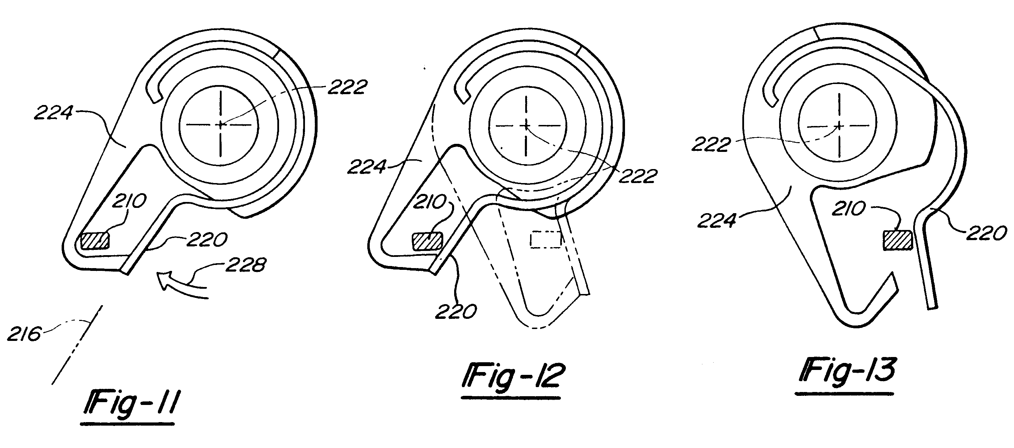

The relative rotary position of female thread 54 and male thread 62 define the relative axial length of sleeve assemblies 22,22 and resultally the dimension between face 21 and face 25. Adjusting gear 64 may be selectively rotated by an adjustment mechanism 320 which derives motive force by harnessing angular displacements of lever 16 which exceed that which is necessary to displace friction pad 28 through a clearance dimension into engagement with rotor 30. A rigid lever 210 is secured to eccentric 15 as shown in Figure 8. Actuation of eccentric 16 produces a corresponding displacement of rigid lever 210 through a range of angular displacement beginning at locus 216 and ending at locus 218. The outermost radial portion of rigid lever 210 engages resilient lever 220 which is rotatably disposed about axis 222 of adjusting gear 64. Resilient lever 220 is drivingly engaged with reaction member 224 which is also drivingly engaged to one way clutch 226 via torque limiting device 230. The desired rotary position of adjusting gear 64 is accomplished by the interaction of rigid lever 210 and resilient lever 220. Resilient lever 220 is preloaded in direction 228 against reaction member 224. The preload is a result of deformation of resilient member 220 against reaction member 224. The preload magnitude is preferably equal to the force necessary to generate the torque required to drive the adjustment system while in free running mode. Such resistance of the adjustment system is a result of gear and thread engagements, bearing losses, etc. Rigid lever 210 as shown in Figures 11-13 is angularly displaced from locus 216 through a first angle before engaging resilient lever 220 as shown in Figure 12. Upon the engagement of rigid lever 210 and resilient lever 220, reaction member 224 will be driven a corresponding angular displacement. When the angular displacement of reaction member 224 corresponds to the displaced position at which no clearance exists between friction pad 28 and rotor 30, continued displacement of rigid lever 210 as a result of system deflection will overcome the preload of resilient member 220 deforming same as shown in Figure 13.

In the preferred embodiment, one-way clutch 226 is a zero backlash free clutch enabling rotation in one direction with no torque/rotation transmitted in the opposite direction and the torque limiting device 230 is a coil spring wound about an external radial surface of one-way clutch 226. A first end of the wire used to construct the coil spring is driven by engagement with reaction member 224. A second end of the wire used to construct the coil spring is terminated as a coil loop ending on the external surface of one-way clutch 226. The coil is wound to an internal diameter slightly smaller than the external diameter of one-way clutch 226 thereby establishing a positive transmission of torque therethrough. The coil is wound and installed such that transmission of torque therethrough to accomplish adjustment tightens the coil around the external surface of one-way clutch 226. Upon release of brake force, eccentric 16 will return to an unactuated position consequently returning rigid lever 210 to beginning locus 216. Rigid lever 210 drives reaction member 224 to the unactuated position.

When friction pad 28 is sufficiently worn to require replacement, adjustment gear 64 must be de-adjusted or reversed to permit removal. Such may be accomplished by securing an appropriately sized wrench to adjusting gear 64 or either gear 50,50 and rotating the adjustment gear in the de-adjust direction. The de-adjust function is accomplished when torque has been applied which exceeds the torque threshold of torque limiting device 230 causing the coil to slip on the external surface of one-way clutch 226. In this operation, no damaging torques are imposed upon adjustment mechanism 320.

One skilled in the art will readily recognize that certain specific details shown in the foregoing specification and drawings are exemplary in nature and subject to modification without departing from the teachings of the disclosure. Various modifications of the invention discussed in the foregoing description will become apparent to those skilled in the art. All such variations that basically rely on the teachings through which the invention has advanced the art are properly considered within the spirit and scope of the invention.

## Claims

1. In a caliper assembly for a disc brake including opposed friction pads at least one of which may be axially displaced into engagement with a rotor rotatably maintained about an axis and drivingly associated with a vehicle wheel, said caliper assembly including an eccentric bearingly carried in a caliper housing and rotatably engaged to a reciprocating element to convert rotation of said eccentric to a reciprocating motion ranging from a unactuated position to an actuated position; said reciprocating element defining an axially disposed first face and further having first and second annularly displaced axially extending bores, said caliper assembly including sleeve assemblies disposed in said first and second bores with portions extending therefrom and engaging a load plate; said load plate defining a annularly extending axially disposed second face which may be axially displaced from said first face by adjustment of the axially extending dimension of said sleeve assemblies, said sleeve assemblies each including a first axially extending cylindrical member having a first end engageable with said load plate and a second end having threads defined on an external surface thereof; said sleeve assemblies each including a second axially extending cylindrical member having an opening defining a bore having threads defined on the surface thereof for cooperating with said threads defined on the external surface of said first cylindrical member; said second cylindrical member including a first end having a external surface rotatably engageable with one of said first and second bores and a second end defining a radially extending portion disposed thereon defining a limit of axial displacement in a direction toward said first face; said sleeve assemblies further including means to control a relative rotary position between said first and second cylindrical members by relative rotation of said second member with respect to said first cylindrical member, said means to control a relative rotary position between said first and second cylindrical members of said first and second sleeve assemblies includes a first gear drivingly connected to said first cylindrical member of said first sleeve assembly and a second gear drivingly connected to said first cylindrical member of said second sleeve assembly and said first and second gears being drivingly engageable with a third gear wherein rotation of said third gear to a predetermined position accomplishes control of the relative rotary position between said first and second cylindrical members and said means to control the relative rotary position of said third gear comprises:
a first lever disposed for angular displacement about a first axis by driving engagement to said eccentric;
said first lever moving through a first angular increment from a first locus to a second angularly displaced locus wherein said angular displacement is proportional to a desired clearance between said friction pad and said rotor;
a second lever radially extending from a second axis nonintersecting said first axis;
said first lever engaging said second lever upon displacement of said first lever by said first angular increment;
said second lever drivingly engaged to a means for limiting torque transmission;
said means for limiting torque transmission being drivingly engaged to a means for transmitting torque;
said means for transmitting torque transmits torque when driven in a first direction of rotation and transmits no torque when driven in a second opposing direction of rotation; and
said means for transmitting torque drivingly engages said third gear.

2. The invention of Claim 1 wherein said first lever is a rigid lever and said second lever is a resilient lever.

3. The invention of Claim 1 wherein means for transmitting torque is a one-way clutch.

4. The invention of Claim 1 wherein said means for limiting torque is an axially extending coil spring having an internal diameter characterized by a smaller radial dimension than an external radial surface of said means for transmitting torque, and said spring being disposed about said external radial surface to facilitate driving engagement of torque below a threshold value such that said spring slides relative to said external radial surface of said means for transmitting torque upon the application of torque which exceeds said threshold value.

5. The invention of Claim 2 wherein said resilient member provides a preload force in a direction opposing the direction of angular displacement of said rigid lever moving from said first locus toward said second locus and said preload force is achieved by a predetermined displacement against a rigid reaction member.

6. The invention of Claim 5 wherein said rigid member applies a force which exceeds said preload force and displaces said resilient member upon the occurrence of system defection subsequent to engagement of said friction pad against said rotor.

7. The invention of Claim 1 wherein said first axis is disposed orthogonal to said second axis.

8. In a caliper assembly for a disk brake including opposed friction pads at least one of which may be axially displaced into engagement with a rotor rotatably maintained about an axis and drivingly associated with a vehicle wheel said caliper assembly including an eccentric bearingly carried in a caliper housing and rotatably engaged to a reciprocating element to convert rotation of said eccentric to a reciprocating motion ranging from an unactuated position to an actuated position; said reciprocating element defining an axially disposed first face and further having first and second annularly displaced axially extending bores, said caliper assembly including first and second axially extending members disposed in said first and second bores with portions extending axially beyond a plane defined by said first face by an adjustable axial dimension wherein said adjustable axial dimension of said axially extending members defines a clearance dimension between said friction pads and said rotor, said axially extending members having threads defined thereon which engage cooperating threads which are axially fixed relative to said first face of said reciprocating member, and said axially extending members provide an adjustable axial dimension as a result of a relative rotary position of threads defined thereon with respect to said threads which are axially fixed relative to said first face of said reciprocating member said rotary position being established by a mechanism comprising;
a first lever disposed for angular displacement about a first axis by driving engagement to said eccentric;
a second lever radially extending from a second axis disposed parallel to an axis disposed through said first and second axially extending members;
said first lever engaging said second lever and transmitting a respective angular displacement in a first direction of rotation from a first position to a second position;
said second lever drivingly engaged to a means for limiting torque transmission therethrough to a predetermined threshold;
said means for limiting torque transmission being drivingly engaged to a means for transmitting torque which transmits torque in said first direction and transmits no torque in a second direction opposite said first direction of rotation; and
said means for transmitting torque drivingly engages said axially extending members to rotate same in said first direction of rotation to provide a relative rotary position thereof which corresponds to a desired clearance dimension between said friction pads and said rotor.

9. The invention of Claim 8 wherein said first lever moves through a first angle before engaging said second lever wherein said first angle defines a desired clearance between said friction pad and said rotor.

10. The invention of Claim 8 wherein said first axis is disposed orthogonal to said second axis.

11. The invention of Claim 8 wherein said means for transmitting torque is a one-way clutch.

12. The invention of Claim 8 wherein said means for limiting torque is an axially extending coil spring having an internal diameter with a smaller radial dimension than an external diameter of an external radial surface of said means for transmitting torque, said spring being disposed about said external radial surface to facilitate driving engagement of torques below a threshold value and said spring slides relative to said external radial surface of said means for transmitting torque upon the application of a torque which exceeds said threshold value.

13. The invention of Claim 8 wherein said first lever is a rigid lever and said second lever is a resilient lever.

14. The invention of Claim 13 wherein said resilient lever provides a preload force in said second direction of rotation as a result of a predetermined displacement against a rigid reaction member.

15. The invention of Claim 14 wherein said rigid lever applies force which exceeds said preload force and displaces said resilient member upon the occurrence of a system deflection subsequent to engagement of said friction pad against said rotor.

16. The invention of Claim 14 wherein said reaction member is driven by said rigid member which drives said resilient member to said first position upon return of said reciprocating element to an unapplied position.
